# EUROPÄISCHE PATENTANMELDUNG

(11) **EP 0 675 473 A1**
(43) Veröffentlichungstag der Anmeldung: **04.10.1995**
(21) Anmeldenummer: 95104715.8
(22) Anmeldetag: 30.03.1995
(51) Int. Cl.: G08G 1/133, G08G 1/123

(54) **System fur Positionsbestimmung von Linienfahrzeugen**

(30) Priorität: 30.03.1994 DE 4411275
(71) Anmelder: Alcatel SEL Aktiengesellschaft, D-70435 Stuttgart (DE)
(72) Erfinder: Wiedmann, Heinz, D-71636 Ludwigsburg (DE)
(74) Vertreter: Pechhold, Eberhard, Dipl.-Phys.

(57) **Zusammenfassung**

Es wird ein System zur Bestimmung der Position von auf vorgegebenen Routen verkehrenden Straßenfahrzeugen (F1, F2) angegeben, das mit nur wenigen fest installierten streckenseitigen Synchronisationspunkten (P1, ..., P3), an denen die Fahrzeuge mit der Strecke Ortungsinformation austauschen, auskommt. Die Mehrzahl der eine z.B. über Radumdrehungszähler vorgenommene fahrzeugseitige Kopplung korrigierenden Synchronisationspunkte (S1 - S24) befinden sich an Straßenbiegungen oder Kuppen, deren Positionen auf den Fahrzeugen oder in einer zentralen Leitstelle (Z) in Form eines Richtungsänderungs-Streckenprofils abgespeichert sind. Aktuell über Gyroskope festgestellte Richtungsänderungen der Fahrzeuge werden mit im Streckenprofil abgelegten Soll-Richtungsänderungen korreliert und die Fahrzeugpositionen danach korrigiert.

## Beschreibung

Die Erfindung betrifft ein System zur Positionsbestimmung von Linienfahrzeugen gemäß dem Oberbegriff des Patentanspruchs 1.

Eine genaue Kenntnis der Positionen der einzelnen Fahrzeuge eines Personenbeförderungssystems ist Voraussetzung für eine Optimierung des Fahrtenverlaufes und für eine zuverlässige Einhaltung des Fahrplanes. Über die Kenntnis der Positionen der einzelnen Fahrzeuge werden Fahrplanabweichungen ausgeglichen, Fahrgastinformationen (z.B. über Verspätungen) erzeugt und somit die Qualität des Transportangebotes erhöht. Flexiblere Steuerungsarten, z.B. Steuerung nach Bedarf, sind überdies nur bei ständiger genauer Kenntnis der Fahrorte der einzelnen Fahrzeuge zu realisieren.

Heutige Fahrzeugortungssysteme verwenden vorher festgelegte Kontrollstellen, z.B. Haltepunkte oder entlang der Fahrtroute installierte Baken als Synchronisationspunkte. Mit Hilfe von Koppeleinrichtungen, die die zurückgelegte Strecke oder Geschwindigkeit und Zeit erfassen und auswerten, werden die Positionen zwischen den Synchronisationspunkten errechnet.

Derartige Konstrollstellen erfordern aufwendige Installationen entlang der zu fahrenden Strecke, die regelmäßig gewartet werden müssen und nicht selten durch Beschädigungen (Verkehrsunfälle, Vandalismus etc.) ausfallen. Dies schmälert den Nutzen derartiger Einrichtungen, so daß diese sich bis heute noch nicht in der gewünschten Breite durchsetzen konnten.

In der DE-AS 23 01 054 ist eine Anordnung zur Lokalisierung eines Fahrzeuges beschrieben, bei der feste Ortspunkte allein durch Richtungsänderungen entlang einer vorgegebenen Fahrtroute vorgegeben sind. Das Fahrzeug erkennt anhand z.B. des Lenkeinschlages eine Richtungsänderung und sendet diese, zusammen mit dem ebenfalls erfaßten, von dem zuletzt passierten Ortspunkt an zurückgelegten Weg, an eine ortsfeste Station. In dieser Station sind die Wegstrecken zwischen allen Ortspunkten sowie die Richtungsänderungen gespeichert, die an einem jeweiligen Ortspunkt vorzunehmen sind, um einen bestimmten nächsten Ortspunkt zu erreichen. Durch Vergleich der vom Fahrzeug gesendeten Information mit der gespeicherten Information ermittelt die zentrale Stelle den nächsten vom Fahrzeug anzusteuernden Ortspunkt und die bis dorthin zurückzulegende Entfernung und teilt dies dem Fahrzeug mit. Das Fahrzeug kann dann durch Subtraktion der gefahrenen Wegstrecke von der mitgeteilten Soll-Wegstrecke die Entfernung zum nächsten Ortspunkt ermitteln und das Erreichen dieses Ortspunktes feststellen.

In Spalte 2, letzter Absatz der o.g. DE-AS ist außerdem erwähnt, daß es bekannt ist, die zurückgelegte Weglänge und die vorgenommenen Richtungsänderungen eines Fahrzeuges ständig zu messen und auszuwerten, um auf den augenblicklichen Standort zu schließen. Dieses als Koppelnavigation bekannte Prinzip, welches ohne feste Ortspunkte auskommt, sei jedoch ungenau, weil sich Fehler akkumulierten.

Die in der DE-AS beschriebene Anordnung ist wenig flexibel. So können hier nur jeweils gerade Fahrtroutenstücke zwischen Ortspunkten vorgegeben werden, was auf kurvig verlaufenden Straßen eine dichte Folge von Ortspunkten und die Erfassung sehr geringer Richtungsänderungen voraussetzen würde, für die die vorgesehene geringe Genauigkeit des Richtungsänderungserfassungssystems nicht ausreichend wäre.

Der Erfindung liegt die Aufgabe zugrunde, ein flexibleres System zur Positionsbestimmung für die Fahrzeuge eines Personenbeförderungssystems, beispielsweise eines Omnibus-Netzes anzugeben, das auf Baken oder ähnliche, mit aufwendigen Kommunikationseinrichtungen ausgestattete Synchronisationspunkte weitgehend verzichtet und das dennoch die erforderliche genaue Positionsbestimmung auch bei beliebig kompliziert verlaufenden Fahrtrouten gewährleistet.

Diese Aufgabe wird durch die Merkmale des Patentanspruchs 1 gelöst.

Durch die Möglichkeit, Änderungen der Bewegungsrichtung ständig festzustellen und mit einem abgespeicherten Richtungsänderungs-Streckenprofil zu vergleichen, können die Fahrzeuge ihre jeweilige, z.B. durch Wegmessung mit Hilfe eines Radumdrehungszählers grob vorgegebene Position an jeder Stelle, an der die vorgegebene Fahrtroute eine identifizierbare Richtungsänderung - auch in vertikaler Richtung - vorsieht, überprüfen und korrigieren. Baken oder vergleichbare Einrichtungen sind dann nur noch am Beginn und am Ende der Fahrtroute oder an Streckenabschnitten nötig, die über längere Distanz hinweg keine Kurven oder Neigungsänderungen (Kuppen) aufweisen. Auch Umleitungsstrecken lassen sich ohne zusätzliche Kosten mit Synchronisationspunkten belegen.

Ausgestaltungen des Systems nach der Erfindung sind in den Unteransprüchen angegeben.

So sieht Anspruch 2 vor, die Positionsbestimmung und Korrektur auf den einzelnen Fahrzeugen vorzunehmen, während dies, gemäß Anspruch 3, an einer zentralen Stelle, z.B. in einer Leitstelle eines Omnibusverkehrsnetzes geschehen soll.

Eine in Anspruch 4 wiedergegebene Ausgestaltung des Systems nach der Erfindung ermöglicht die Umschaltung zwischen mehreren Fahrtrouten, so daß Fahrzeuge z.B. von einer auf eine andere Linie wechseln oder eine vorprogrammierte Umleitungsstrecke fahren können.

Anspruch 5 betrifft die zusätzliche Ausstattung der Fahrzeuge mit Satellitennavigationsempfängern.

Verschiedene Ausgestaltungen der noch verbleibenden, mit Datenübertragungsmitteln ausgestatteten Synchronisationspunkte sind Gegenstand der Ansprüche 6 bis 9.

Die Ansprüche 10 und 11 betreffen Einrichtungen, mit denen horizontale und/oder vertikale Bewegungsrichtungsänderungen auf einem Fahrzeug festgestellt werden können.

Anspruch 12, schließlich, betrifft die zusätzliche Auswertung der ersten Ableitung der auf den Fahrzeugen festgestellten Bewegungsrichtungsänderungen zur Verbesserung der Genauigkeit der Positionsbestimmung.

Anhand von zwei Figuren soll nun ein Ausführungsbeispiel des Systems nach der Erfindung eingehend beschrieben werden.

Fig. 1 zeigt schematisch einen einfachen Streckenplan einer Omnibus-Nahverkehrslinie mit teils mit Datenübertragungseinrichtungen ausgerüsteten, teils nicht ausgerüsteten Synchronisationspunkten.

Fig. 2 zeigt auf 4 verschiedenen Testfahrten über dieselbe Strecke gewonnene Richtungsänderungs-Streckenprofile.

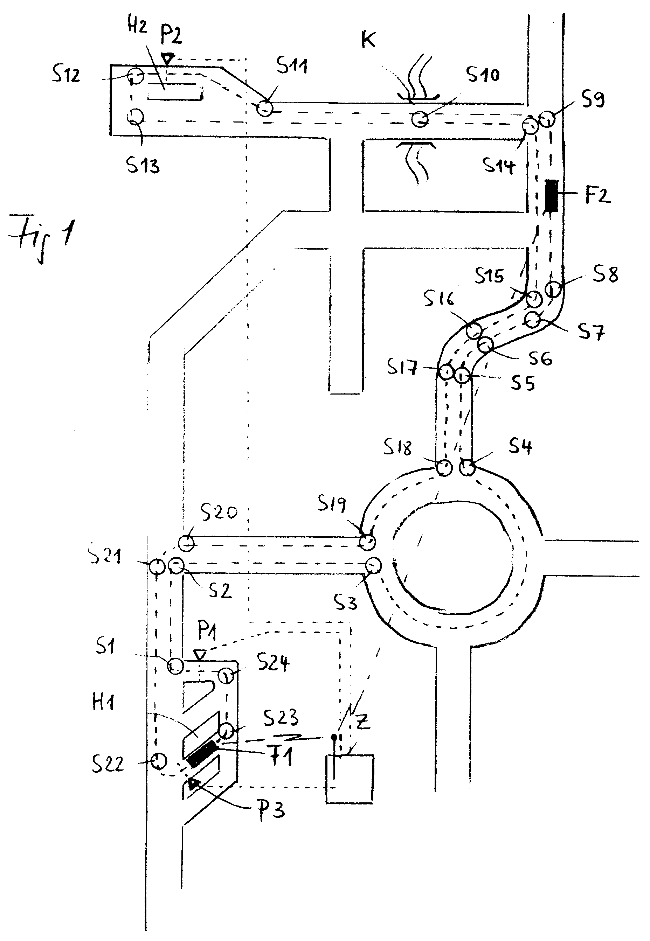

In Fig. 1 ist der Verlauf eines Streckenplanes für eine Omnibus-Nahverkehrslinie wiedergegeben. Die Linie beginnt an einer Haltestelle H1, z.B. einem Quai in einem Omnibusbahnhof, und führt über Teile des Straßennetzes zu einer Endhaltestelle H2. Die genaue Fahrtroute verläuft für Hin- und Rückrichtung teilweise unterschiedlich. Auf der Linie verkehrende Fahrzeuge F1, F2 stehen mit einer Leitstelle Z in Funkverbindung.

Entlang der Strecke sind Synchronisationspunkte P1 ... P3, S1-S24 eingerichtet, von denen wenige - die Synchronisationspunkte P1 ... P3 - mit Datenübertragungseinrichtungen ausgerüstet und mit der Leitstelle Z über Standleitung oder Funk verbunden sind.

Die nicht ausgerüsteten Synchronisationspunkte sind frei programmierbar und zeichnen sich dadurch aus, daß sie an solchen Stellen der Fahrtroute liegen, an denen die Fahrzeuge planmäßig ihre Bewegungsrichtung ändern. Diese Änderung der Bewegungsrichtung erfolgt zumeist in horizontaler Ebene, z.B. in Kurven oder an Abbiegungen. Es ist jedoch auch möglich, Änderungen der Bewegungsrichtung in vertikaler Ebene auszuwerten und so z.B. Straßenkuppen K als Orte von Synchronisationspunkten zu nutzen, wie dies z.B. in der Figur, am Synchronisationspunkt S10 der Fall ist.

Die Fahrzeuge müssen für jede Ebene, in der Bewegungsrichtungsänderungen erfaßt werden sollen, einen Gyro-Sensor (Gyroskop) tragen, somit zwei derartige Einrichtungen, wenn Änderungen der Bewegungsrichtung in horizontaler Ebene und auch Änderungen der Bewegungsrichtung in vertikaler Ebene zur Einrichtung von Synchronisationspunkten genutzt werden sollen.

Werden auf den Fahrzeugen nicht nur Änderungen der Bewegungsrichtung - die üblicherweise in Grad/s erfaßt werden - ausgewertet, sondern zusätzlich deren erste Ableitungen, so läßt sich der Beginn und das Ende solcher Änderungen erfassen, was die Möglichkeit bietet, bei langgezogenen, gleichmäßig gekrümmten Kurven den Kurvenbeginn oder das Kurvenende zu lokalisieren und als Synchronisationspunkt auszuwählen, wie dies z.B. an den Synchronisationspunkten S5-S8 der Fall ist.

Im Bereich stark befahrener Straßenabschnitte, wo mit häufigen Staus und mit Zähflüssigkeit des Verkehrs zu rechnen ist, kann es sinnvoll sein, anstelle zeitlicher Änderungen der Bewegungsrichtung, deren Amplituden von der jeweiligen Fahrgeschwindigkeit abhängen, die Änderungen der Bewegungsrichtung, z.B. mittels Division der zeitlichen Änderungen durch die aktuelle Fahrzeuggeschwindigkeit, wegbezogen zu erfassen.

Die hierzu notwendigen Umrechnungen können durch Bordrechner auf den Fahrzeugen oder durch einen an zentraler Stelle, z.B. in der Leitstelle befindlichen Rechner vorgenommen werden. Im letzteren Fall müssen sich die Fahrzeuge in ständigem Datenaustausch mit der zentralen Stelle befinden und jeweils erfaßte Änderungen ihrer Bewegungsrichtung unverzüglich der zentralen Stelle mitteilen.

Auf den Fahrzeugen oder in der zentralen Stelle befinden sich Speicher, welche alle entlang der Fahrtroute vorgesehenen (planmäßigen) Änderungen der Bewegungsrichtung, über der zurückgelegten Strecke aufgetragen, als eine Art Streckenprofil enthalten.

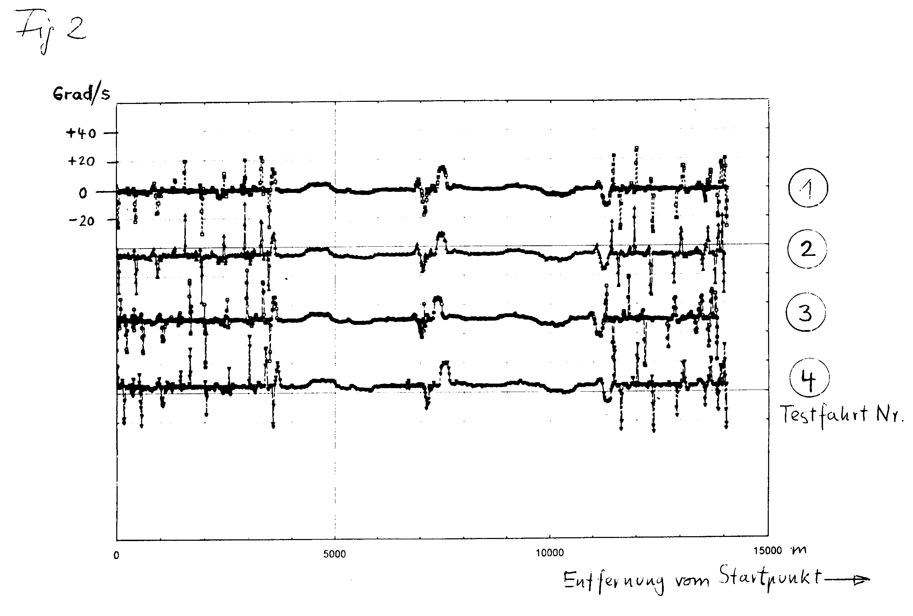

Dieses Streckenprofil hat ein ähnliches Aussehen, wie in Fig. 2 dargestellte, auf vier verschiedenen Testfahrten über dieselbe Strecke gewonnene Profile, in denen aktuell gemessene zeitliche Änderungen der Bewegungsrichtung über der Fahrstrecke aufgezeichnet wurden.

In Fig. 2 ist deutlich sichtbar, daß die einzelnen Profile geringfügig gegeneinander verschoben sind. Ist die Position einer markanten, in dem gespeicherten Profil wiederauffindbaren Bewegungsrichtungsänderung bekannt, so kann die Abweichung von der Soll-Position festgestellt und die aktuelle Position um diese Abweichung korrigiert werden. Die weitere Kopplung erfolgt dann ausgehend von der korrigierten Position.

An den ausgerüsteten Synchronisationspunkten P1-P3 befinden sich Abfrageeinrichtungen, die fahrzeugseitige Transponder, z.B. bekannte Infrarot- oder Mikrowellentransponder, auslesen und dabei die Nummer des passierenden Fahrzeuges und ggf. weitere relevante Daten erfassen und an die Leitstelle weitermelden. Umgekehrt erkennen die Fahrzeuge einen ausgerüsteten Synchronisationspunkt durch eigene Empfangsmittel. Dies können fahrzeugseitige Abfrageeinrichtungen sein, die straßenseitige Transponder oder in der Fahrbahn verlegte Induktionsschleifen aus lesen und die Kennung des jeweiligen Synchronisationspunktes erfassen.

Eine Ausstattung der Fahrzeuge mit Satellitennavigationsempfängern (GPS oder Differential-GPS) ermöglicht eine zusätzliche Positionsbestimmung, die allerdings nur dort genau ist, wo gute Bedingungen für den Satellitenempfang bestehen. Auf Fahrstrecken durch Tunnels oder tiefe Straßenschluchten muß zwischen den Synchronisationspunkten mit den vorhandenen konventionellen Wegmeßeinrichtungen (z.B. Radumdrehungszähler) gekoppelt werden. Einen Vorteil bietet Satellitennavigation in Fällen, wo Fahrzeuge -z.B. wegen einer plötzlichen, unfallbedingten Straßenblockierungvon der vorgegebenen Fahrtroute abweichen und eine längere, der Leitstelle nicht bekannte Strecke ohne Synchronisation fahren müssen. Hier können der Leitstelle die durch Satellitennavigation ermittelten Positionen mitgeteilt und die Leitstelle so in die Lage versetzt werden, die Fahrzeuge auch auf der Umfahrstrecke zu verfolgen.

## Patentansprüche

1. System zur genauen Bestimmung der Positionen von auf vorgegebenen Routen verkehrenden Straßenfahrzeugen (F1, F2), mit an bekannten geographischen Orten befindlichen Synchronisationspunkten (P1, ..., P3, S1, ..., S24), die von den Fahrzeugen passiert und erkannt werden, mit Einrichtungen auf den Fahrzeugen zur ständigen Erfassung des zurückgelegten Weges und zur Gewinnung von Richtungsänderungsinformation, mit mindestens einer Koppeleinrichtung, die mit Hilfe des jeweils erfaßten, von einem Synchronisationspunkt an zurückgelegten Weges und der gewonnenen Richtungsänderungsinformation eine grobe Positionsbestimmung entlang der Fahrtroute gestattet, und mit Speichern, die vorgegebene Wegstrecken und zugeordnete vorgegebene Richtungsänderungsinformation enthalten und mit Vergleichseinrichtungen, die mittels Vergleichs von aktuell erfaßten Weglängen mit vorgegebenen Wegstrecken das Erreichen eines Synchronisationspunktes feststellen, **dadurch gekennzeichnet,** daß die Einrichtung zur Gewinnung von Richtungsänderungsinformation zur ständigen Erfassung aller horizontaler und/oder vertikaler Änderungen der Bewegungsrichtung des jeweiligen Fahrzeuges ausgebildet sind, daß die Speicher alle entlang einer jeweils vorgegebenen Fahrtroute vorzunehmenden Richtungsänderungen in Abhängigkeit von der jeweils zurückgelegten Strecke einschließlich der an der Fahrtroute gelegenen Synchronisationspunkte enthalten, und daß die Vergleichseinrichtungen aktuell vorgenommene Richtungsänderungen mit den abgespeicherten Richtungsänderungen vergleichen, aus gefundenen Übereinstimmungen die Fahrzeugposition ermitteln und eine ggf. bereits anderweitig ermittelte Fahrzeugposition korrigieren.

2. System nach Anspruch 1,
dadurch gekennzeichnet, daß sowohl Speicher als auch Vergleichseinrichtungen und Korrekturmittel auf den Fahrzeugen angeordnet sind.

3. System nach Anspruch 1,
dadurch gekennzeichnet, daß sich der Speicher sowie Vergleichseinrichtungen und Korrekturmittel an zentraler Stelle (Z) befinden, und daß auf den Fahrzeugen und in der zentralen Stelle Datenübertragungseinrichtungen vorgesehen sind, über die auf den Fahrzeugen erfaßte Weglängen und Richtungsänderungen zu der zentralen Stelle übertragen werden.

4. System nach Anspruch 2 oder 3,
dadurch gekennzeichnet, daß Richtungsänderungen für mehrere vorgegebene Fahrtrouten gespeichert sind und daß zwischen den die einzelnen Fahrtrouten betreffenden Speicherinhalten manuell oder über Funk umgeschaltet werden kann.

5. System nach einem der Ansprüche 1 bis 4,
dadurch gekennzeichnet, daß die Fahrzeuge zusätzlich mit Einrichtungen zur Satellitennavigation oder Differential-Satellitennavigation ausgerüstet sind.

6. System nach einem der Ansprüche 1 bis 5,
dadurch gekennzeichnet, daß an den Synchronisationspunkten (P1, ..., P3) Datenübertragungseinrichtungen vorgesehen sind, die mit auf den Fahrzeugen befindlichen Gegeneinrichtungen Daten austauschen.

7. System nach Anspruch 6,
dadurch gekennzeichnet, daß die an den Synchronisationspunkten (P1, ..., P3) angeordneten Datenübertragungseinrichtungen Transponder sind, die von fahrzeugseitigen Abfrageeinrichtungen ausgelesen werden und mindestens eine Kennung des Synchronisationspunktes auf die Fahrzeuge übertragen.

8. System nach Anspruch 6,
dadurch gekennzeichnet, daß die an den Synchronisationspunkten angeordneten Datenübertragungseinrichtungen Abfrageeinrichtungen sind, die auf den Fahrzeugen befindliche, mindestens eine Fahrzeugkennung ausgebende, Transponder auslesen.

9. System nach Anspruch 6 oder 8,
dadurch gekennzeichnet, daß die an den Synchronisationspunkten vorgesehenen Datenübertragungseinrichtungen über einen Nachrichtenkanal mit einer Leitstelle (Z) verbunden sind.

10. System nach einem der Ansprüche 1 bis 9,
dadurch gekennzeichnet, daß auf den Fahrzeugen für jede Ebene, in der eine Änderung der Bewegungsrichtung erfaßt werden soll, ein Gyroskop vorgesehen ist.

11. System nach Anspruch 10,
dadurch gekennzeichnet, daß unter Ausnutzung des Sagnac-Effektes arbeitende Gyroskope, insbesondere sogenannte optische Fasergyroskope verwendet werden.

12. System nach einem der vorstehenden Ansprüche,
dadurch gekennzeichnet, daß mindestens je ein weiterer Speicher vorgesehen ist, der ein Streckenprofil der ersten Ableitung der entlang der vorgesehenen Fahrtroute vorzunehmenden Richtungsänderungen enthält, daß die Ausgangssignale der zur Erfassung von Änderungen der Bewegungsrichtung auf den Fahrzeugen vorgesehenen Einrichtungen differenziert werden, und daß die Vergleichs- und Korrekturmittel zusätzlich einen Vergleich dieser differenzierten Ausgangssignale mit den im weiteren Speicher enthaltenen Werten durchführen und gefundene Übereinstimmungen bei der Ermittlung der Fahrzeugposition berücksichtigen.
